# EUROPEAN PATENT SPECIFICATION

(11) **EP 3 193 483 B1**
(45) Date of publication and mention of the grant of the patent: **27.02.2019**
(21) Application number: 14901469.8
(22) Date of filing: 23.12.2014
(51) Int. Cl.: H04L 29/06, H04L 12/24, H04L 12/26

(54) **FLOW TABLE AGEING METHOD, DEVICE AND SYSTEM AND COMPUTER-READABLE MEDIUM**
FLUSSTABELLENALTERUNGSVERFAHREN, VORRICHTUNG UND SYSTEM SOWIE COMPUTERLESBARES MEDIUM
PROCÉDÉ, DISPOSITIF ET SYSTÈME DE VIEILLISSEMENT DE TABLE DE FLUX, AINSI QUE SUPPORT D'INFORMATIONS LISIBLE PAR ORDINATEUR

(30) Priority: 10.09.2014 CN 201410457670
(43) Date of publication of application: 19.07.2017
(73) Proprietor: ZTE Corporation, Shenzhen, Guangdong 518057 (CN)
(72) Inventor: HU, Fangwei, Shenzhen Guangdong 518057 (CN); LIU, Qifeng, Shenzhen Guangdong 518057 (CN)
(74) Representative: Brevalex
(86) International application number: PCT/CN2014/094638
(87) International publication number: WO 2016/037442

(56) References cited:
- WO-A1-2014/040240
- CN-A- 101 370 016
- CN-A- 101 702 680
- CN-A- 102 710 448
- CN-A- 102 780 641
- US-A1- 2013 013 598
- Onf: "OpenFlow Switch Specification - Version 1.4.0", , 14 October 2013 (2013-10-14), XP055322618, Retrieved from the Internet: URL:https://www.opennetworking.org/images/ stories/downloads/sdn-resources/onf-specif ications/openflow/openflow-spec-v1.4.0.pdf [retrieved on 2016-11-24]

## Description

### TECHNICAL FIELD

The disclosure relates to a Software Defined Network (SDN) technology, and in particular to a method, device and system for ageing a flow table based on the OpenFlow protocol, and a computer readable medium.

### BACKGROUND

The SDN architecture separates, through the OpenFlow protocol adopted, a control plane and a forwarding plane of a network device to obtain a network controller representing the control plane and a switch representing the forwarding plane respectively. A method for forwarding a data packet in an SDN network based on the OpenFlow protocol is to forward the data packet using a flow table, in which the controller controls multiple switches through the standardized OpenFlow protocol, and issues the flow table to each switch; the switch receives and saves the flow table; and the switch forwards the data packet according to the flow table it saves, after receiving the data packet by the switch from the network.

However, each flow table occupies a certain memory space of the switch. If the switch accumulates the flow tables for a long time, a phenomenon of running out of the memory will occur. Thus, there is a life cycle (also called ageing time) for each flow table.

At present, the life cycle for each flow table takes time as a measure, so each flow table is aged based on the life cycle of time. But, the service providers generally charge users for provided data services according to the service traffic, thus in a case of charging according to the service traffic, ageing the flow table based on the life cycle of time will cause a large number of periodically inquiring messages between the controller and the switch; besides, the controller communicates with the switch through a Transmission Control Protocol (TCP) connection, so a large bandwidth consumption is caused, and periodically inquiring message will cause low charging precision and low real-time accuracy under the condition of taking data traffic as the charging standard.

OpenFlow Switch Specification- Version 1.4.0, October 14, 2013, discloses an ageing a flow table based on the OpenFlow protocol, in which, each flow entry has an idle_timeout and a hard-timeout associated with it.

US 2013013598A1 discloses a flow table managing method.

### SUMMARY

Embodiments of the disclosure provide a method, device and system for ageing a flow table based on the OpenFlow protocol and a computer readable medium, which can reduce the bandwidth consumption caused by periodically inquiring messages between the controller and the switch in a case of taking data traffic as the charging standard, and improve the charging precision and the real-time accuracy.

The invention is defined in the appended independent claims. Additional aspects are set out in the dependent claims.

According to a method, device and system for ageing a flow table, and the computer readable medium provided by of the embodiments of the disclosure, which add a parameter Packet count of a life cycle for a data volume taking a data volume, for which matching is performed according to the flow table, as a measure, the switch can regard the data volume matched as another type of life cycle for the flow table; after completing the matching of fixed data volume through the flow table, the switch ages the flow table, thus it is applicable to an application scenario where the service providers charge users according to the service data traffic.

### BRIEF DESCRIPTION OF THE DRAWINGS

Fig. 1 is a structure diagram of a flow table currently used by a switch;
Fig. 2 is a flowchart of a method for ageing a flow table based on the OpenFlow protocol provided by the embodiments of the disclosure;
Fig. 3 is a structure diagram of a flow chart provided by the embodiments of the disclosure;
Fig. 4 is a flowchart of another method for ageing a flow table based on the OpenFlow protocol provided by the embodiments of the disclosure;
Fig. 5 is a detailed flowchart of a method for ageing a flow table based on the OpenFlow protocol provided by the embodiments of the disclosure;
Fig. 6 is a structure diagram of a switch provided by the embodiments of the disclosure;
Fig. 7 is a structure diagram of another switch provided by the embodiments of the disclosure;
Fig. 8 is a structure diagram of a controller provided by the embodiments of the disclosure;
Fig. 9 is a structure diagram of a controller provided by the embodiments of the disclosure; and
Fig. 10 is a structure diagram of a system for ageing a flow table based on the OpenFlow protocol provided by the embodiments of the disclosure.

### DETAILED DESCRIPTION

The technical solutions in the embodiments of the disclosure are clearly and completely described below in connection with the accompanying drawings.

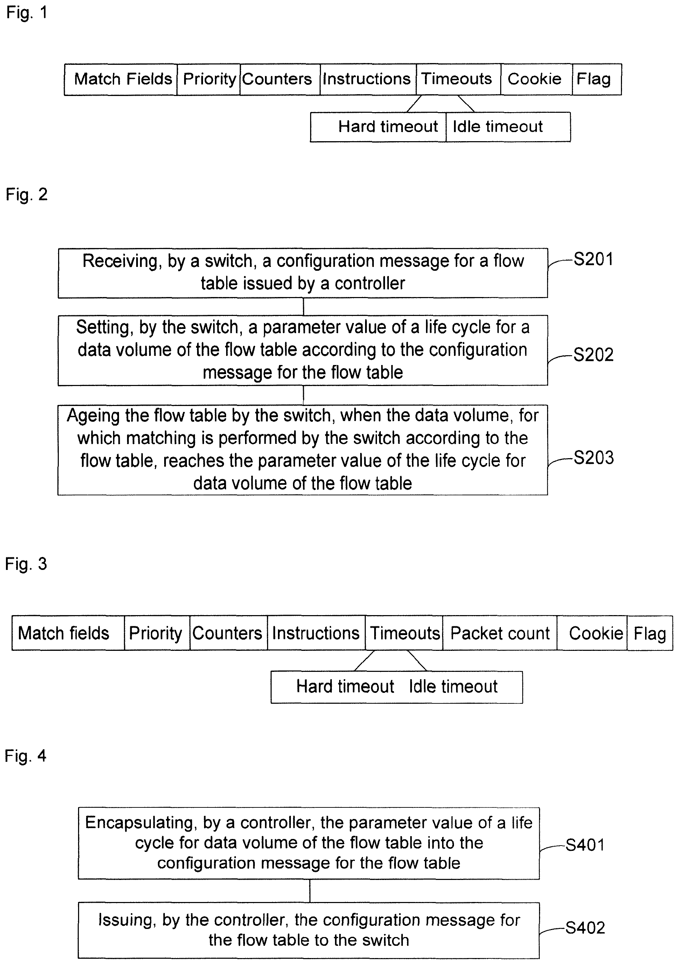

As shown in Fig. 1, the structure of a flow table entry currently used by a switch includes constituent parameters such as Match Fields, Priority, Counters, Instructions, Timeouts with time as a measure, Cookie, Flag for operating and managing flow table entries, and the like. In the structure of the flow table entry shown in Fig. 1, the specific function of each constituent parameter is well known for those skilled in the art. Note that Timeouts taking time as a measure are used for representing the life cycle corresponding to the flow table entry in time, and Timeouts may include parameters of a hard timeout and an idle timeout. The specific definitions of the two parameters are as follows: the parameter of hard timeout represents the maximum lifetime of the flow table entry, and the parameter of idle timeout represents the idle lifetime of the flow table entry. For example, the parameter value of the parameter of hard timeout of a certain flow table entry is set to 30 seconds, which means the switch ages the flow table entry after 30 seconds; the parameter of idle timeout of a certain flow table entry is set to 20 seconds, which means that the switch ages the flow table entry, in a case that the switch does not receive a packet, which can be matched to the flow table entry, within 20 seconds; and both the value of the parameter of hard timeout and the value of the parameter of idle timeout of a certain flow table entry are set to 0, which means the flow table entry will be saved permanently without being aged by the switch unless a controller sends an instruction of deleting the flow table entry to the switch.

The embodiments of the disclosure add, in the existing structure of a flow table, a parameter, Packet count, of a life cycle for a data volume taking the data volume, for which matching is performed according to the flow table, as a measure, so that the switch can regard the data volume matched as another type of a life cycle for the flow table; after completion of the matching at fixed data volume by the switch by means of the flow table, the switch ages the flow table, so it is applicable to a scenario where the service providers charge users according to the service data traffic.

With reference to Fig. 2, it shows a method for ageing a flow table based on the OpenFlow protocol which is provided by the embodiments of the disclosure, and the method is applicable to any switch based on the OpenFlow protocol. The method may include the following steps.

At S201: a switch receives a configuration message for the flow table issued by a controller.

Exemplarily, in an SDN structure based on the OpenFlow protocol, the switch forwards a data packet according to the flow table issued by the controller. Thus, flow information issued by the controller in the present embodiment is called a flow table, and the configuration message for the flow table, as a carrier for the controller to issue the flow table, can include parameter values corresponding to the constituent parameters of the flow table issued by the controller; for example, the controller can issue a parameter value, Packet count, of a life cycle for a data volume of the flow table, and the parameter value, Packet count, of the life cycle for the data volume of the flow table is the maximum data volume, for which matching is performed by the switch according to the flow table.

It can be understood that the configuration message for the flow table further includes parameter values corresponding to the constituent parameters in the structure of the flow table shown in Fig. 1. These parameters are the common technical means for those skilled in the art, so they will not be elaborated here.

At S202: the switch sets the parameter value of the life cycle for the data volume of the flow table according to the configuration message for the flow table.

Exemplarily, after receiving the configuration message for the flow table, the switch can also perform detection and verification of consistency of the configuration message for the flow table; when determining by the switch that the configuration message for the flow table is correct, the switch sets the parameter value of the life cycle for the data volume of the flow table according to the configuration message for the flow table .

Note that the configuration message for the flow table includes parameter values corresponding to the constituent parameters in the structure of the flow table shown in Fig. 1 in addition to the parameter value of the life cycle for the data volume of the flow table, thus the structure of the flow table set by the switch according to the configuration message for the flow table is shown in Fig. 3.

It can be understood that after the switch sets the flow table, matching of data and packets can be performed according to the flow table, and the data volume, for which matching is performed by the switch according to the flow table, can be recorded in the matching process.

At S203: when the data volume, for which matching is performed by the switch according to the flow table, reaches the parameter value of the life cycle for the data volume of the flow table, the switch ages the flow table.

Exemplarily, the parameter, Packet count, of the life cycle for the data volume is similar to the parameters, hard timeout and idle timeout, of Timeouts, belonging to a life cycle for the flow table, thus the switch needs to age the flow table so as to reduce the memory space occupied by the flow table, when the parameter, Packet count, of the life cycle for the data volume of the flow table is reached.

Note that the switch ages the flow table with the parameter, Packet count, of the life cycle for the data volume, thereby the life cycle for the flow table is only related to the data volume, for which matching is performed by the switch according to the flow table, and is not related to the time for which the flow table is saved in the switch. Thus, the parameter, Packet count, of the life cycle for the data volume is more suitable for the data services that the service providers charge according to the traffic than the parameters, hard timeout and idle timeout, of Timeouts.

Note that the configuration message for the flow table can also include information indicating a notification of the flow table being aged, which is used for indicating the switch to notify the controller of the ageing reason after ageing the flow table.

Correspondingly, when the configuration message for the flow table includes the information indicating a notification of the flow table being aged, and after the switch ages the flow table because the data volume, for which matching is performed by the switch according to the flow table, reaches the parameter value of the life cycle for the data volume of the flow table, the switch can further send the notification of the flow table being aged to the controller, the notification of the flow table being aged includes an ageing reason for representing that the data volume, for which matching is performed by the flow table, reaches the parameter value of the life cycle for the data volume of the flow table.

In addition, the reason for ageing the flow table is that the parameter of the life cycle for the data volume expires, but is not that the parameters, hard timeout and idle timeout, of Timeouts expire, so the switch can also encapsulate the hard timeout remaining for the flow table and the idle timeout remaining for the flow table into the notification of the flow table being aged, so that the controller can synthesize the life cycles in dimensions of time and a data volume to provide a reference for the latter flow table setting.

In addition, when the reason for ageing the flow table is that the parameters, hard timeout and idle timeout, of Timeouts expire, the switch can also encapsulate the parameter value of the life cycle for the data volume remaining for the flow table into the notification of the flow table being aged.

Thus, the notification of the flow table being aged can also include: the parameter value of the life cycle for the data volume remaining for the flow table, the hard timeout remaining for the flow table and the idle timeout remaining for the flow table. It can be understood that when the reason for ageing the flow table is that the parameter of the life cycle for the data volume expires, the parameter value of the life cycle for the data volume remaining for the flow table, which is included in the notification of the flow table being aged, is 0.

The embodiments of the disclosure provide a method for ageing a flow table based on the OpenFlow protocol. The method adds a parameter, Packet count, of a life cycle for a data volume taking the data volume, for which matching is performed according to the flow table, as a measure, so that the switch can regard the data volume matched as another type of life cycle for the flow table; after completion the matching of fixed data volume by the switch according to the flow table, the switch ages the flow table, so the method is applicable to the application scenario where the service providers charge users according to the service data traffic.

Fig. 4 shows another method for ageing a flow table based on the OpenFlow protocol which is provided by the embodiments of the disclosure; the method is applicable to any controller based on the OpenFlow protocol; and the method may include the following steps.

At S401: the controller encapsulates a parameter value of a life cycle for a data volume of the flow table into a configuration message for the flow table.

Specifically, a parameter value, Packet count, of a life cycle for a data volume of the flow table can be the maximum data volume, for which matching is performed by the switch according to the flow table.

At S402: the controller issues the configuration message for the flow table to the switch.

Exemplarily, the configuration message for the flow table is arranged for the switch to set the flow table.

Note that in the SDN structure based on the OpenFlow protocol, the switch forwards the data packet according to the flow table issued by the controller. In the present embodiment, the flow information issued by the controller is called a flow table, and the configuration message for the flow table, as the carrier for the controller to issue the flow table, can include parameter values corresponding to the constituent parameters of the flow table issued by the controller. It can be understood that the configuration message for the flow table includes the parameter values corresponding to the constituent parameters in the structure of the flow table shown in Fig. 1 in addition to the parameter value, Packet count, of the life cycle for the data volume of the flow table. These parameters are the conventional technical means for those skilled in the art, and thus will not be elaborated here.

Note that the configuration message for the flow table can also include information indicating a notification of the flow table being aged, which is used for indicating the switch to notify the controller of the ageing reason after ageing the flow table.

Correspondingly, when the configuration message for the flow table includes the information indicating the notification of the flow table being aged, the controller can also receive the notification of the flow table being aged which is sent by the switch, and the notification of the flow table being aged includes an ageing reason for representing that the data volume, for which matching is performed according to the flow table, reaches the parameter value of the life cycle for the data volume of the flow table.

The reason for ageing the flow table is that the parameter of the life cycle for the data volume expires, but not that the parameters, hard timeout and idle timeout, of the Timeouts expire, so the switch can also encapsulate the hard timeout remaining for the flow table and the idle timeout remaining for the flow table into the notification of the flow table being aged. In addition, when the reason for ageing the flow table is that the parameter hard timeout or the parameter idle timeout of the Timeouts expires, the switch can also encapsulate a parameter value of a life cycle for a data volume remaining for the flow table into the notification of the flow table being aged; thus, the notification of the flow table being aged further includes: the parameter value of the life cycle for the data volume remaining for the flow table, the hard timeout remaining for the flow table and the idle timeout remaining for the flow table. It can be understood that when the reason for ageing the flow table is that the parameter value of the life cycle for the data volume expires, the parameter value of the life cycle for the data volume remaining for the flow table included in the notification of the flow table being aged is 0.

The present embodiment provides another method for ageing a flow table based on the OpenFlow protocol, which adds a parameter, Packet count, of a life cycle for a data volume taking the data volume, for which matching is performed according to the flow table, as a measure, so the switch can regard the data volume matched as another type of life cycle for the flow table; after completing the matching of fixed data volume through the flow table, the switch ages the flow table, so the method is applicable to the application scenario where the service providers charge users according to the service data traffic.

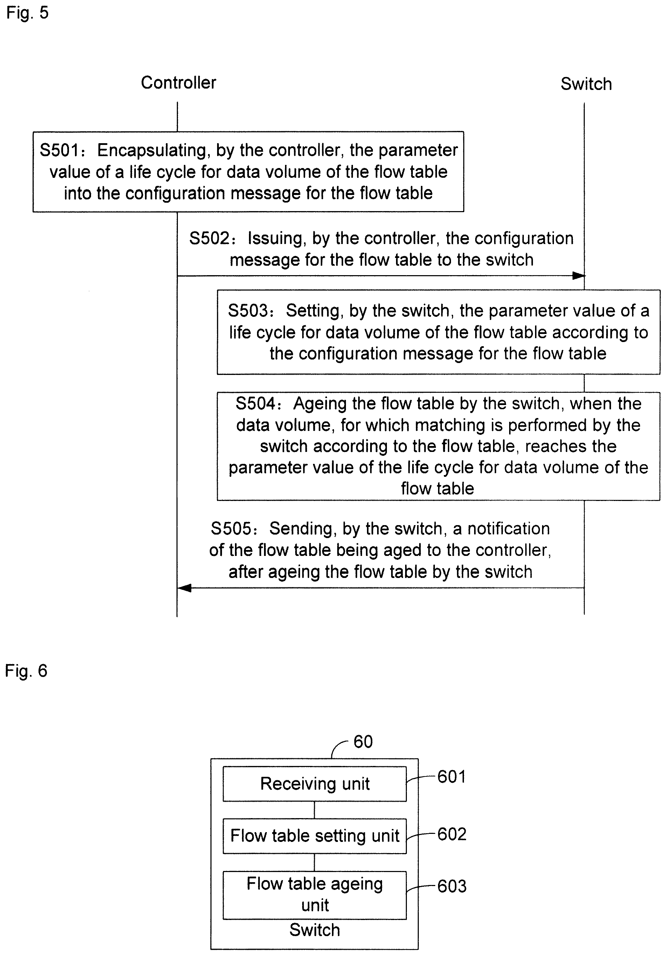

Based on the technical solutions described in the above embodiments, Fig. 5 shows a detailed flow of a method for ageing a flow table based on the OpenFlow protocol which is provided by the embodiments of the disclosure; and the method may include the following steps.

At S501: the controller encapsulates a parameter value of a life cycle for a data volume of the flow table into a configuration message for the flow table,
Exemplarily, the configuration message for the flow table, as the carrier for the controller to issue the flow table, is a basis for the switch to set the flow table; the existing structure of the flow table is shown in Fig. 1; but a parameter value corresponding to a parameter, Packet count, of the life cycle for the data volume is added in the structure of the flow table of the present embodiment, and the specific structure is shown in Fig. 3; so the configuration message for the flow table of the present embodiment is a little different from the existing configuration message for the flow table; by taking the configuration message for the flow table OFPT_FLOW_MOD described by the C programming language for example, the message OFPT_FLOW_MOD includes the ofp_flow_mod structure of each constituent parameter of the flow table to be set by the switch; those skilled in the art can use other computer languages to describe various messages, information and structures presented in the present embodiment, which will not be limited by the present embodiment. In the present embodiment, the specific ofp_flow_mod structure is shown below:

```
    struct ofp_flow_mod {
    struct ofp_header header;
    ......
    uint64_t packet_count;/*The maximum number of packet bytes before the flow
    table is deleted, taking M bytes as a unit.*/
    ......
    };
```

in the above specific ofp_flow_mod structure, only the parameter, Packet count, of the life cycle for the data volume of the flow table and a parameter value corresponding to the parameter, Packet count, of the life cycle for the data volume are shown; other constituent parameters as shown in Fig. 1 belong to conventional means in the art, and thus will not be elaborated here. According to the specific ofp_flow_mod structure, the controller encapsulates the parameter value of the life cycle for the data volume of the flow table into the configuration message for the flow table OFPT_FLOW_MOD.

At S502: the controller issues the configuration message for the flow table to the switch.

Exemplarily, because the configuration message for the flow table is arranged for the switch to set the flow table. Note that the configuration message for the flow table can also include information indicating a notification of the flow table being aged, which is used for indicating the switch to notify the controller of an ageing reason after ageing the flow table.

At S503: the switch sets the parameter value of the life cycle for the data volume of the flow table according to the configuration message for the flow table.

Exemplarily, because the configuration message for the flow table includes parameter values corresponding to the constituent parameters in the structure of the flow table shown in Fig. 1 in addition to the parameter value of the life cycle for the data volume of the flow table. Thus, the structure of the flow table set by the switch according to the configuration message for the flow table is shown in Fig. 3.

It can be understood that after the switch sets the flow table, matching of the data and packets can be performed according to the flow table, and the data volume, for which matching is performed by the switch according to the flow table, can be recorded in the matching process.

At Step 504: when the data volume, for which matching is performed by the switch according to the flow table, reaches the parameter value of the life cycle for the data volume of the flow table, the switch ages the flow table.

Exemplarily, the a parameter value, Packet count, of a life cycle for a data volume is similar to the parameters, hard timeout and idle timeout, of the Timeouts, belonging to a life cycle for the flow table, thus when the parameter value, Packet count, of the life cycle for the data volume of the flow table is reached, the switch needs to age the flow table, so as to reduce the memory space occupied by the flow table.

At S505: the switch sends a notification of the flow table being aged to the controller after ageing the flow table.

In the present embodiment, specifically, those skilled in the art can understand that when the flag OFPFF_SEND_FLOW_REM in the flow table is set, it means the switch needs to send the notification of the flow table being aged to the controller after ageing the flow table, so as to notify a reason for ageing the flow table.

In the present embodiment, the specific ageing notification message is OFPT_FLOW_REMOVED; the specific ofp_flow_removed structure for recording the notification content is shown below:

```
    struct ofp_flow_removed {
    struct ofp_header header;
    uint8_t reason; /*Ageing reason*/
    uint16_t idle_timeout; /*Remaining idle time*/
    uint16_t hard_timeout; /* Remaining hard time*/
    uint64_t packet_count_overflow; /* Remaining data volume count*/
    ...... };
```

the ageing reason, uint8_t reason, in the ofp_flow_removed structure can be an enumeration value, specifically:

```
    enum ofp_flow_removed_reason {
    OFPRR_IDLE_TIMEOUT = 0, /*Flow idle time exceeded idle_timeout.*/
    OFPRR_HARD_TIMEOUT = 1, /*Flow time exceeded hard_timeout.*/
    OFPRR_DELETE = 2, /*Deletion in flow mode.*/
    OFPRR_GROUP_DELETE = 3, /*Group has been removed.*/
    OFPRR_PACKET_COUNT=4, /*Packet data volume matched exceeded
    packet_count.* /
    };
```

it can be seen from the above specific enumeration value that after the switch completes the matching of fixed data volume according to the flow table, the value of ageing reason for ageing the flow table should be 4.

In addition, the reason for ageing the flow table is that the parameter of the life cycle for the data volume expires, but not that the parameters, hard timeout and idle timeout, of the Timeouts expire, so the switch can also encapsulate the hard timeout remaining for the flow table and the idle timeout remaining for the flow table into a notification of the flow table being aged. In addition, when the reason for ageing the flow table is that the parameter hard timeout or the parameter idle timeout of the Timeouts expires, the switch can also encapsulate a parameter value of a life cycle for a data volume remaining for the flow table into the notification of the flow table being aged; thus, the notification of the flow table being aged can also include: the parameter value of the life cycle for the data volume remaining for the flow table, the hard timeout remaining for the flow table and the idle timeout remaining for the flow table. In the specific ofp_flow_removed structure of the ageing notification message OFPT_FLOW_REMOVED, these three parameters uint64_t packet_count_overflow, uint16_t idle_timeout and uint16_t hard_timeout are set as the parameter value of the life cycle for the data volume remaining for the flow table, the idle timeout remaining for the flow table and the hard timeout remaining for the flow table respectively.

It can be understood that when the reason for ageing the flow table is that the parameter of the life cycle for the data volume expires, the parameter uint64_t packet_count_overflow in the ageing notification message OFPT_FLOW_REMOVED of the flow table is set as 0.

In the detailed flow of the method for ageing a flow table based on the OpenFlow protocol which is provided by the present embodiment, the switch ages the flow table through a parameter Packet count of a life cycle for a data volume, so that the life cycle for the flow table is only related to the data volume, for which matching is performed by the switch according to the flow table, and is not related to the time for which the flow table is saved in the switch. Thus, the parameter Packet count of the life cycle for the data volume is more suitable for the data services that the service providers charge according to the traffic, compared with the parameters, hard timeout and idle timeout, of the Timeouts.

Based on the same technical conception as those in the above embodiments, Fig. 6 shows a structure of a switch 60 provided by the embodiments of the disclosure. The switch may include a receiving unit 601, a flow table setting unit 602 and a flow table ageing unit 603, in the switch:
the receiving unit 601 is configured to receive a configuration message for the flow table issued by a controller, the configuration message for the flow table including the parameter value of the life cycle for the data volume of the flow table;
the flow table setting unit 602 is configured to set the parameter value of the life cycle for the data volume of the flow table according to the configuration message for the flow table received by the receiving unit 601; and
the flow table ageing unit 603 is configured to age the flow table, when a data volume, for which matching is performed by the switch 60 according to the flow table, reaches the parameter value of the life cycle for the data volume of the flow table.

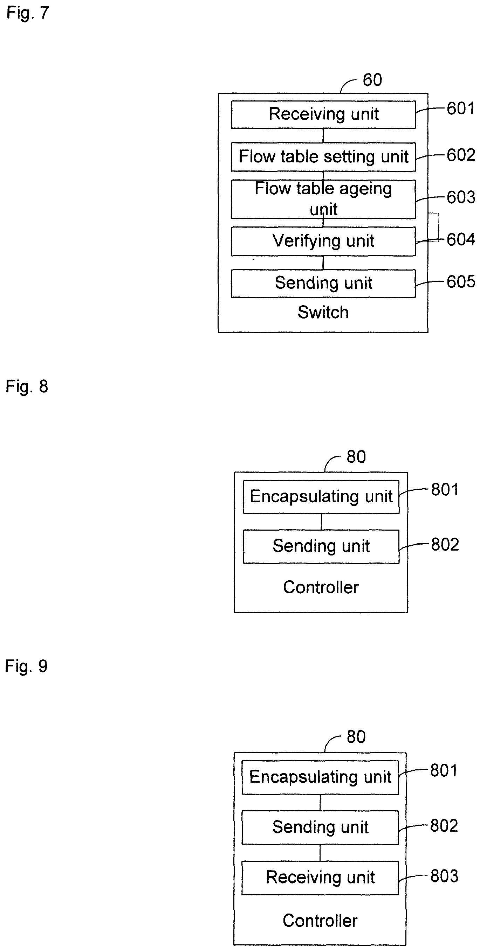

Exemplarily, with reference to Fig. 7, the switch 60 further includes a verifying unit 604 configured to perform detection and verification of consistency of the configuration message for the flow table,
and trigger the flow table setting unit 602, when determining that the configuration message for the flow table is correct.

Exemplarily, with reference to Fig. 7, the switch 60 further includes a sending unit 605 configured to send a notification of the flow table being aged to the controller, when the configuration message for the flow table includes information indicating the notification of the flow table being aged, the notification of the flow table being aged includes an ageing reason for representing that the data volume, for which matching is performed according to the flow table, reaches the parameter value of the life cycle for the data volume of the flow table.

In an embodiment, the notification of the flow table being aged further includes the parameter value of the life cycle for the data volume remaining for the flow table, the hard timeout remaining for the flow table and the idle timeout remaining for the flow table.

In practical applications, the receiving unit 601 can be realized by an interface board (also called board card) in the switch; the interface board is used for connecting a user terminal or the interface board of other network device; the interface board has various different types of network communication interfaces, such as a 100M bandwidth interface, a 1000M bandwidth interface, a 10G bandwidth interface, an ATM interface, an optical interface (for connecting an optical cable), and an electric interface (for connecting an electrical cable). The flow table setting unit 602, the flow table ageing unit 603 and the verifying unit 604 can be realized by a Central Processing Unit (CPU) or a Field Programmable Gate Array (FPGA) in the switch.

The present embodiment provides a switch 60, which adds a parameter Packet count of a life cycle for a data volume taking the data volume, for which matching is performed according to the flow table, as a measure, so the switch 60 can regard the data volume matched as another type of life cycle for the flow table; after completing the matching of fixed data volume through the flow table, the switch 60 ages the flow table, so the switch is applicable to the application scenario where the service providers charge users according to the service data traffic.

With reference to Fig. 8, it shows a structure of a controller 80 which is provided by the embodiments of the disclosure. The controller 80 may include an encapsulating unit 801 and a sending unit 802.

The encapsulating unit 801 is configured to encapsulate the parameter value of the life cycle for the data volume of the flow table into the configuration message for the flow table.

The sending unit 802 is configured to issue the configuration message for the flow table encapsulated by the encapsulating unit to the switch, and the configuration message for the flow table is arranged for the switch to set the flow table.

Exemplarily, with reference to Fig. 9, the controller 80 may further include a receiving unit 803 configured to receive a notification of the flow table being aged which is sent by the switch, the notification of the flow table being aged including an ageing reason for representing that the data volume, for which matching is performed according to the flow table, reaches the parameter value of the life cycle for the data volume of the flow table.

In an embodiment, the notification of the flow table being aged further includes the parameter value of the life cycle for the data volume remaining for the flow table, the hard timeout remaining for the flow table and the idle timeout remaining for the flow table.

The encapsulating unit 801 can be realized by a microprocessor or an FPGA in the controller; the sending unit 802 and the receiving unit 803 can be realized by the interface board (also called board card) in the controller; the interface board is used for connecting a user terminal or the interface board of other network device; the interface board has various different types of network communication interfaces, such as a 100M bandwidth interface, a 1000M bandwidth interface, a 10G bandwidth interface, an ATM interface, an optical interface (for connecting an optical cable), and an electric interface (for connecting an electrical cable).

The present embodiment provides a controller 80, which adds a parameter Packet count of a life cycle for a data volume taking the data volume, for which matching is performed according to the flow table, as a measure, so the switch 60 can regard the data volume matched as another type of life cycle for the flow table; after completing the matching of fixed data volume through the flow table, the switch 60 ages the flow table, so the controller is applicable to the application scenario where the service providers charge users according to the service data traffic.

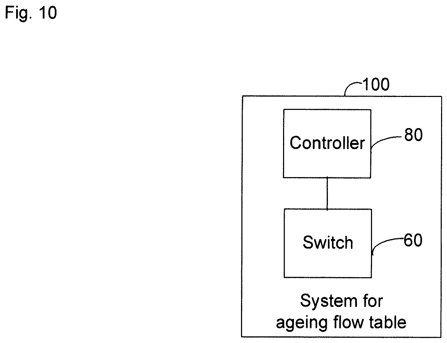

Based on the same technical conception as those in the above embodiments, Fig. 10 shows a system 100 for ageing a flow table based on the OpenFlow protocol which is provided by the embodiments of the disclosure. The system 100 includes the switch 60 and the controller 80.

The switch 60 is configured to:
receive the configuration message for the flow table issued by the controller 80, the configuration message for the flow table including the parameter value of the life cycle for the data volume of the flow table;
set the parameter value of the life cycle for the data volume of the flow table according to the configuration message for the flow table; and
age the flow table, when the data volume, for which matching is performed by the switch 60 according to the flow table, reaches the parameter value of the life cycle for the data volume of the flow table.

The controller 80 is configured to:
encapsulate the parameter value of the life cycle for the data volume of the flow table into the configuration message for the flow table; and
issue the configuration message for the flow table to the switch 60, the configuration message for the flow table being arranged for the switch 60 to set the flow table.

As an implementation, the controller 80 is further configured to receive a notification of the flow table being aged which is sent by the switch 60, the notification of the flow table being aged including an ageing reason for representing that the data volume, for which matching is performed according to the flow table, reaches the parameter value of the life cycle for the data volume of the flow table.

As an implementation, the switch 60 is further configured to perform detection and verification of consistency of the configuration message for the flow table, and set the parameter value of the life cycle for the data volume of the flow table according to the received configuration message for the flow table, when determining that the configuration message for the flow table is correct.

As an implementation, the switch 60 is further configured to send a notification of the flow table being aged to the controller, when the configuration message for the flow table includes the information indicating the notification of the flow table being aged, the notification of the flow table being aged including an ageing reason for representing that a data volume, for which matching is performed according to the flow table, reaches the parameter value of the life cycle for the data volume of the flow table.

As an implementation, the notification of the flow table being aged further includes the parameter value of the life cycle for the data volume remaining for the flow table, the hard timeout remaining for the flow table and the idle timeout remaining for the flow table.

The present embodiment provides a system 100 for ageing a flow table based on the OpenFlow protocol, which adds a parameter Packet count of a life cycle for a data volume taking the data volume, for which matching is performed according to the flow table, as a measure, so the switch 60 can regard the data volume matched as another type of life cycle for the flow table; after completing the matching of fixed data volume through the flow table, the switch 60 ages the flow table, so the system is applicable to the application scenario where the service providers charge users according to the service data traffic.

Those skilled in the art should understand that the embodiments of the disclosure can provide a method, a system or a computer program product. Thus, forms of hardware embodiments, software embodiments or embodiments combining software and hardware can be adopted in the disclosure. Moreover, a form of the computer program product implemented on one or more computer available storage media (including, but not limited to, a magnetic disk memory, an optical memory and the like) containing computer available program codes can be adopted in the disclosure.

The disclosure is described with reference to flowcharts and/or block diagrams of the method, the device (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or other programmable data processing device to generate a machine, so that a device for realizing functions designated in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions designated in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step for realizing the functions designated in one or more flows of the flowcharts and/or one or more blocks of the block diagrams.

What are described above are only the particular embodiments of the disclosure and are not intended to limit the scope of protection of the disclosure.

## Claims

1. A method at a switch for ageing a flow table based on an OpenFlow protocol, **characterized in that** the method comprises:
receiving, by the switch (60), an OpenFlow configuration message for the flow table issued by a controller (80), wherein the configuration message for the flow table comprises a parameter value of a life cycle for a data volume of the flow table, the parameter value comprises the maximum data volume corresponding to the data volume;
setting, by the switch (60), the parameter value of the life cycle for the data volume of the flow table according to the configuration message for the flow table; and
ageing the flow table by the switch (60), when a data volume, for which matching is performed by the switch (60) according to the flow table, reaches the parameter value of the life cycle for the data volume of the flow table.

2. The method according to claim 1, wherein after receiving, by the switch (60), the configuration message for the flow table issued by the controller (80), and before setting, by the switch (60), the parameter value of the life cycle for the data volume of the flow table according to the configuration message for the flow table, the method further comprises:
performing, by the switch (60), detection and verification of consistency of the configuration message for the flow table; and
setting, by the switch (60), the parameter value of the life cycle for the data volume of the flow table according to the configuration message for the flow table, when determining by the switch (60) that the configuration message for the flow table is correct.

3. The method according to claim 1, wherein after ageing the flow table by the switch (60), the method further comprises:
sending, by the switch (60), a notification of the flow table being aged to the controller (80), when the configuration message for the flow table comprises information indicating the notification of the flow table being aged, wherein the notification of the flow table being aged comprises an ageing reason for representing that the data volume, for which matching is performed according to the flow table, reaches the parameter value of the life cycle for the data volume in the flow table,
wherein the notification of the flow table being aged further comprises: a parameter value of a life cycle for a data volume remaining for the flow table, a hard timeout remaining for the flow table, and an idle timeout remaining for the flow table.

4. A method at a controller for ageing a flow table based on an OpenFlow protocol, **characterized in that** the method comprises:
encapsulating, by the controller (80), a parameter value of a life cycle for a data volume of the flow table into an OpenFlow configuration message for the flow table; wherein the parameter value comprises the maximum data volume corresponding to the data volume; and
issuing, by the controller (80), the configuration message for the flow table to a switch (60), wherein the configuration message for the flow table is arranged for the switch (60) to set the flow table.

5. The method according to claim 4, wherein when the configuration message for the flow table comprises information indicating a notification of the flow table being aged, the method further comprises:
receiving, by the controller (80), the notification of the flow table being aged which is sent by the switch (60), wherein the notification of the flow table being aged comprises an ageing reason for representing that a data volume, for which matching is performed according to the flow table, reaches the parameter value of the life cycle for the data volume of the flow table,
wherein the notification of the flow table being aged further comprises: a parameter value of a life cycle for a data volume remaining for the flow table, a hard timeout remaining for the flow table, and an idle timeout remaining for the flow table.

6. A switch (60), based on an OpenFlow protocol, **characterized in that** the switch (60) comprises: a receiving unit (601), a flow table setting unit (602) and a flow table ageing unit (603), wherein
the receiving unit (601) is configured to receive an OpenFlow configuration message for a flow table issued by a controller (80), wherein the configuration message for the flow table comprises a parameter value of a life cycle for a data volume of the flow table; wherein the parameter value comprises the maximum data volume corresponding to the data volume;
the flow table setting unit (602) is configured to set the parameter value of the life cycle for the data volume of the flow table according to the configuration message for the flow table received by the receiving unit (601); and
the flow table ageing unit (603) is configured to age the flow table, when a data volume, for which matching is performed by the switch (60) according to the flow table, reaches the parameter value of the life cycle for the data volume of the flow table.

7. The switch according to claim 6, wherein the switch (60) further comprises: a verifying unit (604) configured to perform detection and verification of consistency of the configuration message for the flow table and to trigger the flow table setting unit (602), when determining that the configuration message for the flow table is correct.

8. The switch according to claim 6, wherein the switch (60) further comprises: a sending unit (802) configured to send a notification of the flow table being aged to the controller (80) when the configuration message for the flow table comprises information indicating the notification of the flow table being aged, wherein the notification of the flow table being aged comprises an ageing reason for representing that the data volume, for which matching is performed according to the flow table, reaches the parameter value of the life cycle for the data volume of the flow table.

9. The switch according to claim 8, wherein the notification of the flow table being aged further comprises: a parameter value of a life cycle for a data volume remaining for the flow table, a hard timeout remaining for the flow table, and an idle timeout remaining for the flow table.

10. A controller (80), based on an OpenFlow protocol, **characterized in that** the controller (80) comprises an encapsulating unit (801) and a sending unit (802), wherein
the encapsulating unit (801) is configured to encapsulate a parameter value of a life cycle for a data volume of a flow table into an OpenFlow configuration message for the flow table;
wherein the parameter value comprises the maximum data volume corresponding to the data volume; and
the sending unit (802) is configured to issue the configuration message for the flow table encapsulated by the encapsulating unit (801) to a switch (60), wherein the configuration message for the flow table is arranged for the switch (60) to set the flow table.

11. The controller according to claim 10, wherein the controller (80) further comprises a receiving unit (803) configured to receive a notification of the flow table being aged which is sent by the switch (60), wherein the notification of the flow table being aged comprises an ageing reason for representing that a data volume, for which matching is performed according to the flow table, reaches the parameter value of the life cycle for the data volume of the flow table.

12. The controller according to claim 11, wherein the notification of the flow table being aged further comprises: a parameter value of a life cycle for a data volume remaining for the flow table, a hard timeout remaining for the flow table, and an idle timeout remaining for the flow table.

13. A system (100) for ageing a flow table based on an OpenFlow protocol, **characterized in that** the system (100) comprises:
a switch (60) according to claim 6; and
a controller (80) according to claim 10.

14. A computer readable medium in which an executable instruction is stored, wherein the executable instruction is configured to perform the method for ageing a flow table according to all the steps of any one of claims 1 to 3.

15. A computer readable medium in which an executable instruction is stored, wherein the executable instruction is configured to perform the method for ageing a flow table according to all the steps of any one of claims 4 to 5.

## Patentansprüche

1. Verfahren an einem Koppler (Switch) zum Altern einer Ablauftabelle auf der Basis eines OpenFlow-Protokolls, **dadurch gekennzeichnet, dass** das Verfahren umfasst:
Empfangen, durch den Koppler (60), einer OpenFlow-Konfigurationsnachricht für die Ablauftabelle, die durch eine Steuereinrichtung (80) ausgegeben wird, wobei die Konfigurationsnachricht für die Ablauftabelle einen Parameterwert für einen Lebenszyklus für ein Datenvolumen der Ablauftabelle umfasst, wobei der Parameterwert das maximale Datenvolumen umfasst, das dem Datenvolumen entspricht;
Einstellen, durch den Koppler (60), des Parameterwerts des Lebenszyklus für das Datenvolumen der Ablauftabelle gemäß der Konfigurationsnachricht für die Ablauftabelle; und
Altern der Ablauftabelle durch den Koppler (60), wenn ein Datenvolumen, für das ein Abgleich durch den Koppler (60) gemäß der Ablauftabelle durchgeführt wird, den Parameterwert des Lebenszyklus für das Datenvolumen der Ablauftabelle erreicht.

2. Verfahren nach Anspruch 1, bei dem nach dem Empfangen, durch den Koppler (60), der Konfigurationsnachricht für die Ablauftabelle, die durch die Steuereinrichtung (80) ausgegeben wird, und vor dem Einstellen, durch den Koppler (60), des Parameterwerts des Lebenszyklus für das Datenvolumen der Ablauftabelle gemäß der Konfigurationsnachricht für die Ablauftabelle, das Verfahren ferner umfasst:
Durchführen, durch den Koppler (60), eines Erfassens und Verifizierens der Konsistenz der Konfigurationsnachricht für die Ablauftabelle; und
Einstellen, durch den Koppler (60), des Parameterwerts des Lebenszyklus für das Datenvolumen der Ablauftabelle gemäß der Konfigurationsnachricht für die Ablauftabelle, wenn durch den Koppler (60) bestimmt wird, dass die Konfigurationsnachricht für die Ablauftabelle korrekt ist.

3. Verfahren nach Anspruch 1, bei dem nach dem Altern der Ablauftabelle durch den Koppler (60) das Verfahren ferner umfasst:
Senden, durch den Koppler (60), einer Benachrichtigung, dass die Ablauftabelle gealtert ist, zu der Steuereinrichtung (80), wenn die Konfigurationsnachricht für die Ablauftabelle Informationen umfasst, welche die Benachrichtigung angeben, dass die Ablauftabelle gealtert ist, wobei die Benachrichtigung, dass die Ablauftabelle gealtert ist, einen Alterungsgrund zum Darstellen umfasst, dass das Datenvolumen, für das ein Abgleich gemäß der Ablauftabelle durchgeführt wird, den Parameterwert des Lebenszyklus für das Datenvolumen in der Ablauftabelle erreicht,
wobei die Benachrichtigung, dass die Ablauftabelle gealtert ist, ferner umfasst: einen Parameterwert eines Lebenszyklus für ein Datenvolumen, das für die Ablauftabelle verbleibt, eine harte Zeitüberschreitung, die für die Ablauftabelle verbleibt, und eine Leerlauf-Zeitüberschreitung, die für die Ablauftabelle verbleibt.

4. Verfahren an einer Steuereinrichtung zum Altern einer Ablauftabelle auf der Basis eines OpenFlow-Protokolls, **dadurch gekennzeichnet, dass** das Verfahren umfasst:
Einkapseln, durch die Steuereinrichtung (80), eines Parameterwerts eines Lebenszyklus für ein Datenvolumen der Ablauftabelle in eine OpenFlow-Konfigurationsnachricht für die Ablauftabelle; wobei der Parameterwert das maximale Datenvolumen umfasst, das dem Datenvolumen entspricht; und
Ausgeben, durch die Steuereinrichtung (80), der Konfigurationsnachricht für die Ablauftabelle zu einem Koppler (60), wobei die Konfigurationsnachricht für die Ablauftabelle so für den Koppler (60) ausgebildet ist, dass die Ablauftabelle eingestellt wird.

5. Verfahren nach Anspruch 4, bei dem, wenn die Konfigurationsnachricht für die Ablauftabelle Informationen umfasst, die eine Benachrichtigung umfassen, dass die Ablauftabelle gealtert ist, das Verfahren ferner umfasst:
Empfangen, durch die Steuereinrichtung (80), der Benachrichtigung, dass die Ablauftabelle gealtert ist, die durch den Koppler (60) gesendet worden ist, wobei die Benachrichtigung, dass die Ablauftabelle gealtert ist, einen Alterungsgrund zum Darstellen umfasst, dass ein Datenvolumen, für das ein Abgleich gemäß der Ablauftabelle durchgeführt wird, den Parameterwert des Lebenszyklus für das Datenvolumen der Ablauftabelle erreicht,
wobei die Benachrichtigung, dass die Ablauftabelle gealtert ist, ferner umfasst: einen Parameterwert eines Lebenszyklus für ein Datenvolumen, das für die Ablauftabelle verbleibt, eine harte Zeitüberschreitung, die für die Ablauftabelle verbleibt, und eine Leerlauf-Zeitüberschreitung, die für die Ablauftabelle verbleibt.

6. Koppler (60) auf der Basis eines OpenFlow-Protokolls, **dadurch gekennzeichnet, dass** der Koppler (60) umfasst: eine Empfangseinheit (601), eine Ablauftabelle-Einstelleinheit (602) und eine Ablauftabelle-Alterungseinheit (603), wobei
die Empfangseinheit (601) zum Empfangen einer OpenFlow-Konfigurationsnachricht für eine Ablauftabelle ausgebildet ist, die durch eine Steuereinrichtung (80) ausgegeben wird, wobei die Konfigurationsnachricht für die Ablauftabelle einen Parameterwert eines Lebenszyklus für ein Datenvolumen der Ablauftabelle umfasst; wobei der Parameterwert das maximale Datenvolumen umfasst, das dem Datenvolumen entspricht;
wobei die Ablauftabelle-Einstelleinheit (602) zum Einstellen des Parameterwerts des Lebenszyklus für das Datenvolumen der Ablauftabelle gemäß der Konfigurationsnachricht für die Ablauftabelle ausgebildet ist, die durch die Empfangseinheit (601) empfangen worden ist; und
die Ablauftabelle-Alterungseinheit (603) zum Altern der Ablauftabelle ausgebildet ist, wenn ein Datenvolumen, für das ein Abgleich durch den Koppler (60) gemäß der Ablauftabelle durchgeführt worden ist, den Parameterwert des Lebenszyklus für das Datenvolumen der Ablauftabelle erreicht.

7. Koppler nach Anspruch 6, wobei der Koppler (60) ferner umfasst: eine Verifizierungseinheit (604), die zum Durchführen eines Erfassens und Verifizierens der Konsistenz der Konfigurationsnachricht für die Ablauftabelle und zum Auslösen der Ablauftabelle-Einstelleinheit (602), wenn bestimmt wird, dass die Konfigurationsnachricht für die Ablauftabelle korrekt ist, ausgebildet ist.

8. Koppler nach Anspruch 6, wobei der Koppler (60) ferner umfasst: eine Sendeeinheit (802), die zum Senden einer Benachrichtigung, dass die Ablauftabelle gealtert ist, an die Steuereinrichtung (80) ausgebildet ist, wenn die Konfigurationsnachricht für die Ablauftabelle Informationen umfasst, welche die Benachrichtigung angeben, dass die Ablauftabelle gealtert ist, wobei die Benachrichtigung, dass die Ablauftabelle gealtert ist, einen Alterungsgrund zum Darstellen umfasst, dass das Datenvolumen, für das ein Abgleich gemäß der Ablauftabelle durchgeführt wird, den Parameterwert des Lebenszyklus für das Datenvolumen der Ablauftabelle erreicht.

9. Koppler nach Anspruch 8, wobei die Benachrichtigung, dass die Ablauftabelle gealtert ist, ferner umfasst: einen Parameterwert eines Lebenszyklus für ein Datenvolumen, das für die Ablauftabelle verbleibt, eine harte Zeitüberschreitung, die für die Ablauftabelle verbleibt, und eine Leerlauf-Zeitüberschreitung, die für die Ablauftabelle verbleibt.

10. Steuereinrichtung (80) auf der Basis eines OpenFlow-Protokolls, **dadurch gekennzeichnet, dass** die Steuereinrichtung (80) eine Einkapselungseinheit (801) und eine Sendeeinheit (802) umfasst, wobei
die Einkapselungseinheit (801) zum Einkapseln eines Parameterwerts eines Lebenszyklus für ein Datenvolumen einer Ablauftabelle in eine OpenFlow-Konfigurationsnachricht für die Ablauftabelle ausgebildet ist; wobei der Parameterwert das maximale Datenvolumen umfasst, das dem Datenvolumen entspricht; und
die Sendeeinheit (802) zum Ausgeben der Konfigurationsnachricht für die Ablauftabelle, die durch die Einkapselungseinheit (801) eingekapselt worden ist, zu einem Koppler (60) ausgebildet ist, wobei die Konfigurationsnachricht für die Ablauftabelle so für den Schalter (60) ausgebildet ist, dass er die Ablauftabelle einstellt.

11. Steuereinrichtung nach Anspruch 10, wobei die Steuereinrichtung (80) ferner eine Empfangseinheit (803) umfasst, die zum Empfangen einer Benachrichtigung, dass die Ablauftabelle gealtert ist, die durch den Koppler (60) gesendet wird, ausgebildet ist, wobei die Benachrichtigung, dass die Ablauftabelle gealtert ist, einen Alterungsgrund zum Darstellen umfasst, dass dieses Datenvolumen, für das ein Abgleich gemäß der Ablauftabelle durchgeführt wird, den Parameterwert des Lebenszyklus für das Datenvolumen der Ablauftabelle erreicht.

12. Steuereinrichtung nach Anspruch 11, wobei die Benachrichtigung, dass die Ablauftabelle gealtert ist, ferner umfasst: einen Parameterwert eines Lebenszyklus für ein Datenvolumen, das für die Ablauftabelle verbleibt, eine harte Zeitüberschreitung, die für die Ablauftabelle verbleibt, und eine Leerlauf-Zeitüberschreitung, die für die Ablauftabelle verbleibt.

13. System (100) zum Altern einer Ablauftabelle auf der Basis eines OpenFlow-Protokolls, **dadurch gekennzeichnet, dass** das System (100) umfasst:
einen Koppler (60) nach Anspruch 6; und
eine Steuereinrichtung (80) nach Anspruch 10.

14. Computerlesbares Medium, in dem eine ausführbare Anweisung gespeichert ist, wobei die ausführbare Anweisung zum Durchführen des Verfahrens zum Altern einer Ablauftabelle gemäß allen Schritten von einem der Ansprüche 1 bis 3 ausgebildet ist.

15. Computerlesbares Medium, in dem eine ausführbare Anweisung gespeichert ist, wobei die ausführbare Anweisung zum Durchführen des Verfahrens zum Altern einer Ablauftabelle gemäß allen Schritten von einem der Ansprüche 4 bis 5 ausgebildet ist.

## Revendications

1. Procédé, au niveau d'un commutateur, pour vieillir une table de flux basée sur un protocole OpenFlow, **caractérisé en ce que** le procédé comprend les étapes :
voir, par le commutateur (60), un message de configuration OpenFlow pour la table de flux émis par un contrôleur (80), dans lequel le message de configuration pour la table de flux comprend une valeur de paramètre d'un cycle de vie pour un volume de données de la table de flux, la valeur de paramètre comprend le volume de données maximum correspondant au volume de données ;
établir, par le commutateur (60), la valeur de paramètre du cycle de vie pour le volume de données de la table de flux conformément au message de configuration pour la table de flux ; et
vieillir la table de flux par le commutateur (60), lorsqu'un volume de données, pour lequel une mise en correspondance est effectuée par le commutateur (60) conformément à la table de flux, atteint la valeur de paramètre du cycle de vie pour le volume de données de la table de flux.

2. Procédé selon la revendication 1, dans lequel, après la réception, par le commutateur (60), du message de configuration pour la table de flux émis par le contrôleur (80), et avant l'établissement, par le commutateur (60), de la valeur de paramètre du cycle de vie pour le volume de données de la table de flux conformément au message de configuration pour la table de flux, le procédé comprend en outre :
l'exécution, par le commutateur (60), d'une détection et d'une vérification de cohérence du message de configuration pour la table de flux ; et
l'établissement, par le commutateur (60), de la valeur de paramètre du cycle de vie pour le volume de données de la table de flux conformément au message de configuration pour la table de flux, lors de la détermination par le commutateur (60) que le message de configuration pour la table de flux est correct.

3. Procédé selon la revendication 1, dans lequel, après le vieillissement de la table de flux par le commutateur (60), le procédé comprend en outre :
l'envoi, par le commutateur (60), d'une notification que la table de flux a été vieillie au contrôleur (80), lorsque le message de configuration pour la table de flux comprend des informations indiquant la notification que la table de flux a été vieillie, dans lequel la notification que la table de flux a été vieillie comprend une raison de vieillissement pour montrer que le volume de données, pour lequel une mise en correspondance est effectuée conformément à la table de flux, atteint la valeur de paramètre du cycle de vie pour le volume de données dans la table de flux,
dans lequel la notification que la table de flux a été vieillie comprend en outre : une valeur de paramètre d'un cycle de vie pour un volume de données restant pour la table de flux, un délai matériel restant pour la table de flux, et un délai d'inactivité restant pour la table de flux.

4. Procédé, au niveau d'un contrôleur, pour vieillir une table de flux sur la base d'un protocole OpenFlow, **caractérisé en ce que** le procédé comprend :
l'encapsulation, par le contrôleur (80), d'une valeur de paramètre d'un cycle de vie pour un volume de données de la table de flux dans un message de configuration OpenFlow pour la table de flux ; dans lequel la valeur de paramètre comprend le volume de données maximum correspondant au volume de données ; et
l'émission, par le contrôleur (80), du message de configuration pour la table de flux vers un commutateur (60), dans lequel le message de configuration pour la table de flux est agencé pour que le commutateur (60) établisse la table de flux.

5. Procédé selon la revendication 4, dans lequel, lorsque le message de configuration pour la table de flux comprend des informations indiquant une notification que la table de flux a été vieillie, le procédé comprend en outre :
la réception, par le contrôleur (80), de la notification que la table de flux a été vieillie qui est envoyée par le commutateur (60), dans lequel la notification que la table de flux a été vieillie comprend une raison de vieillissement pour montrer qu'un volume de données, pour lequel une mise en correspondance est effectuée conformément à la table de flux, atteint la valeur de paramètre du cycle de vie pour le volume de données de la table de flux,
dans lequel la notification que la table de flux a été vieillie comprend en outre : une valeur de paramètre d'un cycle de vie pour un volume de données restant pour la table de flux, un délai matériel restant pour la table de flux, et un délai d'inactivité restant pour la table de flux.

6. Commutateur (60), basé sur un protocole OpenFlow, **caractérisé en ce que** le commutateur (60) comprend : une unité de réception (601), une unité d'établissement de table de flux (602) et une unité de vieillissement de table de flux (603), dans lequel
l'unité de réception (601) est configurée pour recevoir un message de configuration OpenFlow pour une table de flux émis par un contrôleur (80), dans lequel le message de configuration pour la table de flux comprend une valeur de paramètre d'un cycle de vie pour un volume de données de la table de flux ; dans lequel la valeur de paramètre comprend le volume de données maximum correspondant au volume de données ;
l'unité d'établissement de table de flux (602) est configurée pour établir la valeur de paramètre du cycle de vie pour le volume de données de la table de flux conformément au message de configuration pour la table de flux reçu par l'unité de réception (601) ; et
l'unité de vieillissement de table de flux (603) est configurée pour vieillir la table de flux, lorsqu'un volume de données, pour lequel une mise en correspondance est effectuée par le commutateur (60) conformément à la table de flux, atteint la valeur de paramètre du cycle de vie pour le volume de données de la table de flux.

7. Commutateur selon la revendication 6, dans lequel le commutateur (60) comprend en outre : une unité de vérification (604) configurée pour effectuer une détection et une vérification de cohérence du message de configuration pour la table de flux et pour déclencher l'unité d'établissement de table de flux (602), lorsqu'il est déterminé que le message de configuration pour la table de flux est correct.

8. Commutateur selon la revendication 6, dans lequel le commutateur (60) comprend en outre : une unité d'envoi (802) configurée pour envoyer une notification que la table de flux a été vieillie au contrôleur (80) lorsque le message de configuration pour la table de flux comprend des informations indiquant la notification que la table de flux a été vieillie, dans lequel la notification que la table de flux a été vieillie comprend une raison de vieillissement pour montrer que le volume de données, pour lequel une mise en correspondance a été effectuée conformément à la table de flux, atteint la valeur de paramètre du cycle de vie pour le volume de données de la table de flux.

9. Commutateur selon la revendication 8, dans lequel la notification que la table de flux a été vieillie comprend en outre : une valeur de paramètre d'un cycle de vie pour un volume de données restant pour la table de flux, un délai matériel restant pour la table de flux, et un délai d'inactivité restant pour la table de flux.

10. Contrôleur (80), basé sur un protocole OpenFlow, **caractérisé en ce que** le contrôleur (80) comprend une unité d'encapsulation (801) et une unité d'envoi (802), dans lequel
l'unité d'encapsulation (801) est configurée pour encapsuler une valeur de paramètre d'un cycle de vie pour un volume de données d'une table de flux dans un message de configuration OpenFlow pour la table de flux ;
dans lequel la valeur de paramètre comprend le volume de données maximum correspondant au volume de données ; et
l'unité d'envoi (802) est configurée pour émettre le message de configuration pour la table de flux encapsulé par l'unité d'encapsulation (801) vers un commutateur (60), dans lequel le message de configuration pour la table de flux est agencé pour que le commutateur (60) établisse la table de flux.

11. Contrôleur selon la revendication 10, dans lequel le contrôleur (80) comprend en outre une unité de réception (803) configurée pour recevoir une notification que la table de flux a été vieillie qui est envoyée par le commutateur (60), dans lequel la notification que la table de flux a été vieillie comprend une raison de vieillissement pour montrer qu'un volume de données, pour lequel une mise en correspondance est effectuée conformément à la table de flux, atteint la valeur de paramètre du cycle de vie pour le volume de données de la table de flux.

12. Contrôleur selon la revendication 11, dans lequel la notification que la table de flux a été vieillie comprend en outre : une valeur de paramètre d'un cycle de vie pour un volume de données restant pour la table de flux, un délai matériel restant pour la table de flux, et un délai d'inactivité restant pour la table de flux.

13. Système (100) pour vieillir une table de flux basée sur un protocole OpenFlow, **caractérisé en ce que** le système (100) comprend :
un commutateur (60) selon la revendication 6 ; et
un contrôleur (80) selon la revendication 10.

14. Support pouvant être lu par un ordinateur dans lequel une instruction exécutable est mémorisée, dans lequel l'instruction exécutable est configurée pour effectuer le procédé pour vieillir une table de flux conformément à toutes les étapes de l'une quelconque des revendications 1 à 3.

15. Support pouvant être lu par un ordinateur dans lequel une instruction exécutable est mémorisée, dans lequel l'instruction exécutable est configurée pour effectuer le procédé pour vieillir une table de flux conformément à toutes les étapes de l'une quelconque des revendications 4 à 5.
